(19) Europäisches Patentamt
European Patent Office
Office européen des brevets

(11) **EP 4 229 018 B1**

(12) **EUROPEAN PATENT SPECIFICATION**

(45) Date of publication and mention
of the grant of the patent:
**06.11.2024  Bulletin 2024/45**

(21) Application number: **21801800.0**

(22) Date of filing: **14.10.2021**

(51) International Patent Classification (IPC):
*C04B 20/10* (2006.01)     *C04B 28/04* (2006.01)
*C04B 111/20* (2006.01)

(52) Cooperative Patent Classification (CPC):
(C-Sets available)
**C04B 20/1029; C04B 20/1033; C04B 28/04;**
C04B 2103/0058; C04B 2103/0062;
C04B 2103/0065; C04B 2111/00594;
C04B 2111/2046; Y02W 30/91          (Cont.)

(86) International application number:
**PCT/US2021/054916**

(87) International publication number:
**WO 2022/081806 (21.04.2022 Gazette 2022/16)**

(54) **THIN FIBER CEMENT ROOF TILES COMPRISING CORE-SHELL EMULSIONS HAVING IMPROVED IMPACT RESISTANCE**

DÜNNFASERZEMENTDACHZIEGEL MIT KERN-SCHALE-EMULSIONEN MIT VERBESSERTER SCHLAGZÄHIGKEIT

TUILES DE TOIT EN FIBROCIMENT MINCES COMPORTANT DES ÉMULSIONS COUR-ÉCORCE PRÉSENTANT UNE RÉSISTANCE AMÉLIORÉE AUX CHOCS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **16.10.2020   US 202063092557 P**

(43) Date of publication of application:
**23.08.2023   Bulletin 2023/34**

(73) Proprietors:
• **Rohm and Haas Company**
  **Collegeville, PA 19426 (US)**
• **Dow Global Technologies LLC**
  **Midland, MI 48674 (US)**

(72) Inventors:
• **ORTIZ, Luz Adriana Gomez**
  **Queretary  Queretaro, 76230 (MX)**
• **HERNÁNDEZ SALAS, Ricardo**
  **Queretary  Queretaro, 76230 (MX)**
• **OLIVEIRA CRUZ, Eduardo**
  **04794-000 Sao Paulo (BR)**
• **CRUZ, Carlos Alfonso**
  **Collegeville, Pennsylvania 19426 (US)**
• **WILLS, Morris Christopher**
  **Collegeville, Pennsylvania 19426 (US)**
• **RAND, Charles J.**
  **Collegeville, Pennsylvania 19426 (US)**

(74) Representative: **Beck Greener LLP**
  **Fulwood House**
  **12 Fulwood Place**
  **London WC1V 6HR (GB)**

(56) References cited:
  **EP-A1- 3 056 540     US-A1- 2019 119 453**

(52) Cooperative Patent Classification (CPC): (Cont.)

C-Sets
**C04B 20/1029, C04B 2103/0062;
C04B 20/1033, C04B 24/2641;
C04B 28/04, C04B 14/28, C04B 16/0641,
C04B 18/24, C04B 24/2641, C04B 40/0064,
C04B 40/0071, C04B 40/0263, C04B 40/04**

**Description**

The present invention relates to impact resistant fiber cement articles, including cement fiberboards and fiber cement roof tiles. More particularly, it relates to fiber cement articles comprising aqueous core-shell emulsion polymers having a rubbery core. Further, the present invention relates to methods of making the impact resistant fiber cement articles.

Use of corrugated fiber cement tiles for roofing on residential and commercial buildings and cement fiberboards for exterior siding continues to grow. Such roof tiles and boards are composed of cement and fillers and are reinforced with fibers. However, recent health and safety restrictions on the use of asbestos fiber has resulted in the growing use of alternative fibers, like polyvinyl alcohol (PVOH). Unfortunately, cement fiberboards and roof tiles made from the alternative fibers have exhibited limited mechanical properties, such as hail impact resistance, thereby limiting their use in countries having strict mechanical property standards, for example, in the United States. Hail resistance has been previously studied and classified according to the test method ANSI/UL 2218-2012 (Impact Resistance of Prepared Roof Covering Materials), American National Standards Institute, Washington, D.C. (2012), which includes impact energy derived from the impact energy of actual hailstones. However, there is no direct correlation between the impact resistance of roof covering materials when impacted by hailstones versus their performance when impacted by steel balls. To achieve acceptable durability, there remains a need for a fiber cement article that provides improved hail resistance.

Recent efforts at improving the crack resistance of fiber cement composites have included attempts to put elastomeric particles into the cement matrix. However, elastomeric particles, being hydrophobic, have been thought not to adhere or bond to a cement matrix, which is polar and hydrophilic. Accordingly, the presence of unbonded particulate elastomers in the cement matrix generally has been found not to allow for the effective transfer of stress from the cement matrix to the particulate elastomers dispersed therein. Nevertheless, no elastomer particles have been found to date that improve impact resistance of fiber cement articles.

U.S. patent no. 7,148,270 B2 to Bowe (Bowe) discloses methods for providing a polymer-modified fiber-cement composite by forming an aqueous composition including admixing an emulsion polymer having a glass transition temperature (Tg) of from -25° C. to 150° C., cement, cellulosic fibers, siliceous material, and water, removing the water and curing the cement. However, fails to disclose fiber cement articles having sufficient impact resistance, such as to meet the ANSI/UL 2218-2012 class 4 hail resistance standard. Accordingly, there remains a need for impact resistant fiber cement articles, such as fiber cement tiles and cement fiberboards.

US 2019/119453 A1 discloses a cementitious composition, optionally further comprising fibrous material, wherein the composition comprises a core-shell polymer, with an acrylic based core having a glass transition temperature as low as -50°C and a silica shell.

The present inventors have sought to solve the problem of providing air cured fiber cement articles, for example, fiber cement boards that provide acceptable impact resistance for widespread use in roofing or walls improving the nail/screw crack resistance when installing the panels.

STATEMENT OF THE INVENTION

In accordance with the present invention, a fiber cement article having improved impact resistance comprises from 1 to 25 wt.%, or, preferably, from 1.5 to 20 wt.%, or, more preferably, from 2.4 to 19 wt.%, based on the total solids weight of the fiber cement article, of one or more core-shell aqueous emulsion polymers having a crosslinked rubbery core with a calculated glass transition temperature (calculated Tg) of from -20 to -140 °C, preferably, -35 °C or lower, and an at least partially grafted acrylic or vinyl shell polymer having a calculated Tg of from 20 to 170 °C, or, preferably, 45 °C or higher, the core-shell aqueous emulsion polymer further having a Z-average primary particle size of from of from 55 to 800 nm particle size, or, preferably, from 110 to 800 nm, or, more preferably, from 140 to 650 nm, cement, and, further wherein, the fiber cement article comprises reinforcing fibers. The shell polymer of the core-shell aqueous emulsion polymer may comprise one or more polymer that comprises the copolymerized residues one or more acrylic or vinyl monomers, for example, the copolymerized residues of methyl methacrylate (MMA).

In a first aspect in accordance with the present invention, a fiber cement article having improved impact resistance comprises from 1 to 25 wt.%, or, preferably, from 1.5 to 20 wt.%, or, more preferably, from 2.4 to 19 wt.%,, based on the total solids weight of the fiber cement article, of one or more core-shell aqueous emulsion polymers having a crosslinked rubbery core with a calculated glass transition temperature (calculated Tg) of -20 to -140 °C or, preferably, -35 °C or lower, and a partially grafted acrylic or vinyl shell polymer having a calculated Tg of from 20 to 170 °C, or, preferably, 45 °C or higher, or, more preferably, from 50 to 150 °C, preferably, wherein, the shell polymer comprises the copolymerized residues of methyl methacrylate (MMA), and wherein the core-shell aqueous emulsion polymer has a Z-average primary particle size of from 55 to 800 nm particle size, or, preferably, from 110 to 800 nm, or, more preferably, from 140 to 650 nm.

In accordance with the fiber cement article of the first aspect of the present invention, wherein the shell of at least one of the one or more core-shell aqueous emulsion polymers in the fiber cement article comprises the copolymerized residues of one or more vinyl or alkyl (meth)acrylate, preferably, one vinyl or $C_1$ to $C_4$ alkyl (meth)acrylates, or, more preferably, one or more vinyl or $C_1$ to $C_4$ alkyl methacrylates, or, even more preferably, methyl methacrylate (MMA).

In accordance with the fiber cement article of the present invention, the shell of the at least one of the one or more core-shell aqueous emulsion polymers may further comprise one or more of carboxylic acid monomers or salts thereof, such as (meth)acrylic acid; (alk)acrylamides; (alk)methacrylamides; silane monomers; phosphorous acid containing monomers; or a combination thereof.

In accordance with the fiber cement article of the first aspect of the present invention, wherein the crosslinked rubbery core of at least one of the one or more core-shell aqueous emulsion polymers in the fiber cement article comprises the copolymerized residues of at least one crosslinking multi-ethylenically unsaturated monomer, preferably, allyl (meth)acrylate, one or more $C_2$ to $C_8$ alkyl acrylates, preferably, one $C_2$ to $C_8$ alkyl acrylate, or, more preferably, ethyl acrylate (EA), butyl acrylate, or ethylhexyl acrylate.

Preferably, in accordance with the fiber cement article of the first aspect of the present invention, the crosslinked rubbery core of the core-shell aqueous emulsion polymer in the fiber cement article comprises the copolymerized residues of from 0.2 to 2 wt.% or, preferably, from 0.25 to 1.4 wt.%, of at least one crosslinking multi-ethylenically unsaturated monomer, monomer, based on the total weight of monomers used to make the crosslinked rubbery core.

Preferably, in accordance with the fiber cement article of the first aspect of the present invention, the weight ratio of the crosslinked rubbery core of the core-shell aqueous emulsion polymer to the shell polymer of the core-shell aqueous emulsion polymer ranges from 80:20 to 97:3, or, preferably, from 87:13 to 94:6, or, more preferably, from 85:20 to 97:3.

In accordance with the fiber cement article of the first aspect of the present invention, wherein the reinforcing fibers are chosen from cellulosic fibers, synthetic fibers or mixtures thereof.

In accordance with the fiber cement article of the first aspect of the present invention, the reinforcing fibers may be synthetic fibers chosen from polyester fibers, such as polyethylene terephthalate (PET), polyvinyl alcohol fibers; polyolefin fibers, such as PP (polypropylene); bi-component polymeric microfibers having polyamide core or polyolefin core; a polymer blend of a polyolefin, preferably, polypropylene (PP) or polypropylene grafted with maleic anhydride (PP-g-MAH); a polymer blend or polyamide and polyolefin mineral; acrylonitrile; and mineral wool.

In accordance with the fiber cement article of the first aspect of the present invention, the reinforcing fibers may be natural fibers chosen from cellulosic fibers from bamboo, wood, such as pine or eucalyptus, hemp, and sisal.

Preferably, in accordance with the fiber cement article of the first aspect of the present invention, wherein the amount of the reinforcing fibers ranges from 0.5 to 10.0 wt.%, or, preferably, from 1.0 to 7.0 wt.%, or, preferably, from 1.5 to 5.0 wt.%, based on the total solids weight of the fiber cement article.

In accordance with the fiber cement article of the first aspect of the present invention, wherein the fiber cement article comprises the core-shell aqueous emulsion polymer, reinforcing fibers, and, in cured form, hydraulic cement, limestone or a cement curing agent, such as an alkali or alkaline metal salt, preferably, calcium formate. The fiber cement article of the present invention may or may not further comprise one or more particulate fillers, preferably, one or more fillers, such as silica, sand, clay, or an extender, such as CaCOs aggregate.

Preferably, in accordance with the fiber cement article of the present invention, hydraulic cement is chosen from ordinary Portland cement, such as ASTM C-150 Type 3 or calcium silicate alite ($3CaO \cdot SiO_2$) or (C3S), belite ($2CaO \cdot SiO_2$) or simply (C2S), and phases composed of tricalcium aluminate ($3CaO \cdot Al_2O_3$) or (C3A) followed by tetra-calcium ferroaluminate ($4CaO \cdot Al_2O_3 \cdot Fe_2O_3$) or C4AF, aluminous cement, and mixtures thereof.

Preferably, in accordance with the fiber cement article of the first aspect of the present invention, wherein the amount of the cement curing agent in the cement ranges from 50 to 80 wt.% or, preferably, from 65 to 75 wt.%, based on total solids weight of fiber cement article.

Preferably, in accordance with the fiber cement article of the first aspect of the present invention, wherein the amount of filler or limestone aggregate, such as one having a weight average particle size (DLS) of from 10 to 100 micron, such as 20 to 60 micron) ranges from 12 to 35 wt.% or, preferably, from 16 to 30 wt.%, based on the total solids weight of the fiber cement article.

In accordance with the fiber cement article of the first aspect of the present invention, wherein the composition further comprises one or more of a thickener, a plasticizer, or a pigment or colorant.

Preferably, in accordance with the fiber cement article of the first aspect of the present invention, wherein the fiber cement article comprises the core-shell aqueous emulsion polymer, reinforcing fibers, and one or more emulsifier or an agglomerating agent, including, more preferably, a nonionic surfactant, a poly(methyl methacrylate) (pmma) particle agglomerating agent, or a combination thereof.

Preferably, in accordance with the fiber cement article of the first aspect of the present invention, wherein the fiber cement article comprises the core-shell aqueous emulsion polymer as aggregates or secondary particles having a weight average particle size of from 200 to less than 5,000 nm.

Preferably, in accordance with the fiber cement article of the first aspect of the present invention comprises a roof tile or a cement fiberboard.

In a second aspect in accordance with the present invention, methods of making a fiber cement article comprises:

forming an aqueous slurry mixture of solids by adding while mixing a dry mix of hydraulic cement comprising a clinker or a cement curing agent and, preferably, further, one or more inorganic fillers, such as sand, silica, limestone or clay, to an aqueous mixture of reinforcing fibers, water from 1 to 3 parts, or, preferably, from 1.5 2 parts of water, based on the total solids weight of the dry mixture, of one or more core-shell aqueous emulsion polymers having a crosslinked rubbery core with a calculated glass transition temperature (calculated Tg) of from -20 to -140 °C or, preferably, -35 °C or lower, and an at least partially grafted acrylic or vinyl shell polymer, having a calculated Tg of from 20 to 170 °C, or, preferably, 45 °C or higher, the shell polymer preferably comprising the copolymerized residues of methyl methacrylate (MMA), and, the core-shell aqueous emulsion polymer further having a weight average primary particle size of from 55 to 800 nm, or, preferably, from 110 to 800 nm, or, more preferably, from 140 to 650 nm; depositing the aqueous slurry mixture onto a perforated forming screen or belt, such as a felt or polymer mesh screen, preferably, a running conveyor screen or belt, more preferably, with suction, to remove excess process water while retaining the solids on the screen or belt, thereby forming an uncured composite precursor having a cement matrix; and, drying or curing the uncured composite precursor under ambient conditions, or at an elevated temperature, or in an autoclave to form a cured article.

In accordance with the method of making the fiber cement article of the second aspect of the present invention, wherein the shell of the core-shell aqueous emulsion polymer in the aqueous slurry mixture comprises the copolymerized residues of one or more vinyl or alkyl (meth)acrylate, preferably, one vinyl or $C_1$ to $C_4$ alkyl (meth)acrylates, or, more preferably, one vinyl or $C_1$ to $C_4$ alkyl methacrylate, or, even more preferably, methyl methacrylate (MMA).

In accordance with the method of making the fiber cement article of the present invention, the shell of the at least one of the one or more core-shell aqueous emulsion polymers may further contain any of the copolymerized residues of one or more carboxylic acid monomers or salts thereof, such as, for example, acrylic acid, methacrylic acid, or itaconic acid; silane monomer, such as, for example, vinyl trimethoxy silane; one or more phosphorous acid containing monomers or salts thereof, such as, for example, phosphoric acid 2-hydroxyethyl methacrylate ester or phosphate esters of polyethylene glycol monomethacrylate; or a combination thereof, based on the total weight of monomer of the shell.

In the shell of the at least one of the one or more core-shell aqueous emulsion polymers, the copolymerized residues of one or more carboxylic acid or salt monomers may be present, for example, in the amount of from 0 to 5 wt.%, or, preferably, from 0.2 to 3 wt.%, based on the total weight of the monomers used to make the copolymer.

In the shell of the at least one of the one or more core-shell aqueous emulsion polymers, the copolymerized residues of the one or more one or more (alk)(meth)acrylamide monomers may be present in the amount of from 0 to 3 wt.%, based on the total weight of the monomers used to make the copolymer.

In the shell of the at least one of the one or more core-shell aqueous emulsion polymers, the copolymerized residues of the one or more phosphorous acid or salt containing monomers may be present in the amount of from 0 to 3 wt.%, based on the total weight of the monomers used to make the copolymer.

In the shell of the at least one of the one or more core-shell aqueous emulsion polymers the copolymerized residues of the one or more silane monomers may be present in the amount of from 0 to 1 wt.%, based on the total weight of the monomers used to make the copolymer.

In accordance with the method of making the fiber cement article of the second aspect of the present invention, wherein the crosslinked rubbery core of the core-shell aqueous emulsion polymer in the aqueous slurry mixture comprises the copolymerized residues of a crosslinking multi-ethylenically unsaturated monomer, preferably, allyl (meth)acrylate, one or more $C_2$ to $C_8$ alkyl acrylates, preferably, one $C_2$ to $C_8$ alkyl acrylate, or, more preferably, ethyl acrylate (EA), butyl acrylate, or ethylhexyl acrylate. Preferably, in accordance with the method of making the fiber cement article of the second aspect of the present invention, the crosslinked rubbery core of the core-shell aqueous emulsion polymer in the aqueous slurry mixture comprises the copolymerized residues of from 0.1 to 1 wt.% or, preferably, from 0.25 to 0.8 wt.%, of a crosslinking multi-ethylenically unsaturated monomer, monomer, based on the total weight of monomers used to make the crosslinked rubbery core.

Preferably, in accordance with the methods of making the fiber cement article of the second aspect of the present invention, wherein the weight ratio of the crosslinked rubbery core of the core-shell aqueous emulsion polymer to the shell polymer of the core-shell aqueous emulsion polymer in the aqueous slurry mixture ranges from 85:20 to 97:3, or, preferably, from 87:13 to 94:6.

In accordance with the methods of making the fiber cement article of the second aspect of the present invention, the methods further comprising:

allowing the uncured composite precursor to dry and to develop green strength;

pressing the uncured composite precursor having green strength in a flat or shaped press to form a pressed article; and,

drying or curing the pressed article to form a fiber cement article.

In accordance with the method of making the fiber cement article in accordance with the second aspect of the present invention as a multilayer fiber cement article, wherein the process further comprises:

drying the uncured composite precursor until it becomes self-supporting to form a first self-supporting uncured composite precursor ply;

moving or conveying the first self-supporting uncured composite precursor ply onto an additional or secondary forming screen, for accepting self-supporting uncured composite precursors as layers or plies, such as a formation cylinder;

forming a second uncured composite precursor ply by forming an aqueous slurry mixture comprising hydraulic cement and reinforcing fibers to remove excess process water and form a second or subsequent self-supporting uncured composite precursor ply and depositing it onto a perforated forming screen or belt; and,

prior to the drying or curing the first self-supporting uncured composite precursor ply, stacking thereon the second uncured composite precursor ply to form a stack of uncured composite precursor plies, optionally, pressing the uncured composite precursor having green strength in a flat or shaped press to form a pressed article; and, drying or curing the stack or pressed article to form a multilayer fiber cement article. Further in accordance with the method of making the multilayer fiber cement article in accordance with the second aspect of the present invention, wherein the process further comprises:

prior to the drying or curing an existing stack of uncured composite precursor plies, forming a subsequent uncured composite precursor by forming an aqueous slurry mixture comprising hydraulic cement and reinforcing fibers to remove excess process water and form a subsequent self-supporting uncured composite precursor ply and depositing it onto a perforated forming screen or belt; and,

stacking the subsequent uncured composite precursor ply onto the existing stack of uncured composite precursor plies to form a thickened existing stack; and,

drying or curing the resulting thickened existing stack to form a fiber cement article. Still further in accordance with the method of making the multilayer fiber cement article in accordance with the second aspect of the present invention, wherein the process further comprises:

prior to the drying or curing the thickened existing stack of uncured composite precursor plies, forming an additional uncured composite precursor by repeating the forming the aqueous slurry mixture to remove excess process water and form an additional self-supporting uncured composite precursor ply and depositing it onto a perforated forming screen or belt; and,

stacking the additional self-supporting uncured composite precursor ply onto the thickened existing stack of uncured composite precursor plies to further grow the stack; if desired, repeating the forming and stacking steps for making and stacking an additional self-supporting uncured composite precursor ply onto the thickened existing stack of uncured composite precursor plies until a stack of a desired or preset thickness has been achieved,

drying or curing the resulting stack to form a fiber cement article.

In accordance with the methods of making the multilayer fiber cement article of the second aspect of the present invention, the methods may further comprise:

allowing the stack of uncured composite precursor plies to dry and to develop green strength;

pressing the uncured composite precursor stack having green strength in a flat or shaped press to form a pressed multilayer fiber cement article; and,

drying or curing the pressed article to form a multilayer fiber cement article, wherein at least one of the uncured composite precursor plies comprises hydraulic cement, the one or more core-shell aqueous emulsion polymers of the present invention, and reinforcing fibers.

In accordance with the method of making the fiber cement article of the second aspect of the present invention, further comprising:

allowing the uncured composite precursor to dry and to develop green strength;

pressing the uncured composite precursor having green strength or uncured composite precursor plies to form a pressed article; and,

drying or curing the pressed article to form a fiber cement article.

Preferably, in accordance with the method of the second aspect of the present invention, wherein the product fiber cement article comprises a roof tile or cement fiberboard.

Preferably, to help penetration of the core-shell aqueous emulsion polymer into the cement matrix in accordance with the method of making the fiber cement article of the second aspect of the present invention, the depositing to remove excess process water comprises applying a vacuum to the perforated forming screen or belt or providing a slow running perforated forming screen or belt.

Unless otherwise indicated, conditions of temperature and pressure are ambient temperature and standard pressure. All ranges recited are inclusive and combinable. Unless otherwise indicated, any term containing parentheses refers, alternatively, to the whole term as if no parentheses were present and the term without them, and combinations of each alternative. Thus, the term "(poly)ethylene glycol" refers to ethylene glycol, polyethylene glycol or their mixtures.

All ranges are inclusive and combinable. For example, the term "a range of from 0.06 to 0.25 wt.%, or, preferably, from 0.06 to 0.08 wt.%" would include each of from 0.06 to 0.25 wt.%, from 0.06 to 0.08 wt.%, and from 0.08 to 0.25wt.%.

As used herein, the term "ANSI" refers to publications of the American National Standards Institute, Washington, D.C.

As used herein, the term "aqueous" means water or a mixture of a major portion of water with a minor (>50 wt.%) of one or more water miscible solvents.

As used herein, the term "aqueous slurry mixture" refers to hydraulic binder compositions used to make fiber cement articles, tiles or fiberboard.

As used herein, the term "ASTM" refers to publications of ASTM International, West Conshohocken, PA.

As used herein, the term "calculated glass transition temperature" or "calculated Tg" means the value calculated using the Fox equation (Fox, Bull. Am. Physics Soc., Volume 1, Issue No. 3, page 123(1956)), as follows:

$$1/Tg(calc.) = \Sigma\ w(M_1)/Tg(M_1) + w(M_2)/Tg(M_2) + \ldots w(M_n)/Tg(M_n)$$

wherein Tg(calc.) is the glass transition temperature calculated for the copolymer,

w($M_1$) is the weight fraction of monomer M1 in the copolymer,
w($M_2$) is the weight fraction of monomer M2 in the copolymer,
w($M_n$) is the weight fraction of monomer Mn in the copolymer,

Tg($M_1$) is the glass transition temperature of the homopolymer of M1,
Tg($M_2$) is the glass transition temperature of the homopolymer of M2, and
Tg($M_n$) is the glass transition temperature of the homopolymer of Mn all temperatures being in °K.

The glass transition temperatures of homopolymers may be found, for example, in Polymer Handbook, edited by J. Brandrup and E.H. Immergut, Wiley Interscience Publishers, New York, 1999.

As used herein, the term "fiber cement article" is interchangeable with and means the same thing as "cement fiberboard" or "fiberboard".

As used herein, the term "hydraulic cement" includes substances which set and harden in the presence of water such as Portland cement, silicate-containing cements, aluminate-based or aluminous cements, pozzolanic cements and composite cements. As used herein, the term "macrofiber" means fiber which has an average linear density greater than or equal to 580 denier and an equivalent diameter of $\geq$ 0.3 mm or greater than or equal to 30 microns) per ASTM D7508/D7508M (2015) Standard Specification for Polyolefin Chopped Strands for Use in Concrete.

As used herein, the term "microfiber" means a fiber which has a linear density of less than 580 denier and an equivalent diameter of < 0.3 mm or less than 30 microns) per ASTM D7580/D7580M (2015) Standard Specification for Polyolefin Chopped Strands for Use in Concrete.

As used herein, the term "polymer" includes homopolymers, such as core homopolymers, and copolymers that are formed from two or more different monomer reactants or that comprise two distinct repeat units.

As used herein, the term "surfactant" means a water dispersible organic molecule that contains both a hydrophilic phase, such as an oligoethoxylate, and a hydrophobic group or phase, such as $C_8$ alkyl or alkylaryl group.

As used herein, the term "total solids" or "solids" refers to all materials in given composition aside from solvents, liquid carriers, unreactive volatiles, including volatile organic compounds or VOCs, ammonia and water.

As used herein, the term "weight average molecular weight" or MW refers to the weight average of the molecular weight distribution of a polymer or plasticizer material determined using gel permeation chromatography (GPC) of a polymer dispersion in water or an appropriate solvent for the analyte polymer or plasticizer at room temperature and using the appropriate conventional polyglycol, vinyl or styrene polymer standards.

As used herein, the term "weight average particle size (DLS)" refers to the weight average of the particle distribution of a pigment, filler or extender determined using dynamic light scattering.

As used herein, the term "Z-average primary particle size" refers to the Z-average of the particle size distribution of an indicated material as determined by light scattering using a Malvern Mastersizer™ light scattering measurement device (Malvern Instruments, Malvern, UK) and mathematically determining the Z-average of the thus measured particle size distribution. The term "weight-average particle size" refers to the result given by mathematically determining the weight average of the thus measured particle size distribution.

As used herein, the phrase "wt.%" stands for weight percent.

In accordance with the present invention, the present inventors discovered that, fiber cement articles further comprising core-shell aqueous emulsion polymers exhibit improved impact resistance. The resulting fiber cement articles exhibit greatly increased impact resistance when compared to conventional air cured-fiber cement roof tiles with no core-shell aqueous emulsion polymer. The present invention enables an improvement of, for example, from 25 to 35% in impact resistance as measured using a Gardner Universal Impact Tester in accordance with ASTM D5420 to evaluate falling weight test for 1.7 cm in diameter sample area.

When used in fiber cement articles, a hard vinyl or alkyl (meth)acrylate shell of the core-shell aqueous emulsion polymer appears to minimize the tackiness of rubbery polymers as well as their tendency to coagulate. Further, even if it comprises no acid or hydrophilic groups in copolymerized form, the shell in the aqueous emulsion polymer composition of the present invention makes the copolymer adequately dispersible in hydraulic cement. Additional monomers in copolymerized form, such as (meth)acrylamides, carboxylic acid monomers, silane monomers, or phosphorous acid monomers, or combinations thereof may be included in the shell for the purpose of delaying set time or promoting bonding between the core-shell aqueous emulsion polymer and cement matrix.

Moreover, the incorporation of core-shell aqueous emulsion polymers has been shown to increase the Gardner impact resistance air cured fiber cement tiles in proportion to the load range of the core-shell aqueous emulsion polymer, and improving with smaller rubber particle size. Accordingly, the fiber cement articles of the present invention comprise core-shell aqueous emulsion polymers formed by conventional emulsion polymerization and without any further processing to increase their Z-average primary particle size.

The fiber cement articles in accordance with the present invention may be formed by processes known in the art, such as the Hatschek, Magnani process, flow-on, or any other water-based fiber cement forming processes known in the art. In general the process comprises forming an aqueous slurry mixture, forming the aqueous slurry mixture into a layer or ply and removing water therefrom, if desired, stacking more than one ply on top of one another to form an uncured composite precursor, then, optionally, pressing the uncured composite precursor, any further shaping, such as cutting and/or embossing, and drying and/or curing, such as under ambient conditions, or at elevated temperature, or in an autoclave, followed by cutting the cured product to a desired size and/or further shaping other than embossing. In general, removing water comprises depositing the aqueous slurry mixture as a layer on a porous screen, such as a felt, to allow for removal of water therefrom. In the flow-on process, pulp sheets are slushed and hydrated in water until hydrated pulp becomes a pulp slurry, followed by mixing the pulp slurry with cement and fillers and transferring the mixture onto a felt to be dewatered. Water in the mixture is removed by vacuum pumps and the mixture is formed by forming rollers and pressure rollers until it becomes a film layer at thickness that may range from 0.40 to 0.70 mm. In the flow on process, thick fiber cement boards can be produced.

Yet another process employed to produce fiber cement composites comprises extrusion. Because it is continuous, extrusion allows a wide range of cross sections in forming extruded products, use of simpler machinery for continuous production, and a low water/cement ratio which can enable fiber cement production with less liquid and solid waste.

The article surfaces may be further finished using methods, such as, for example, sanding, brushing, sandblasting, stamping, embossing, or machining.

The article may be air cured, cured in an autoclave or another known or available curing method or system. The article may be treated with one or more coating treatments. Fiber cement articles may be further shaped and sized or cut into desired shapes and sizes before or after curing. For example, the resulting cured material can then be cut periodically to create articles of a desired length.

In one example of a process in accordance with the present invention, an aqueous slurry mixture is formed by adding cement and an inorganic filler, such as sand or silica, to a mixture of fibers, water and emulsion polymer while mixing. This aqueous slurry mixture is collected into vats or vessels and is deposited onto and filtered through a forming screen or running conveyor, such as felt or a perforated belt of such as NYLON™ polyamide polymer mesh, optionally with suction, to remove excess process water and form an uncured composite precursor. The process may include use an additional or secondary forming screen, such as a formation cylinder, for accepting self-supporting uncured composite precursors as layers or plies wherein one or multiple uncured composite precursor plies of may be accumulated onto the formation cylinder screen and, if multiple plies, stacked until a desired overall material thickness is achieved. The one or more layers of uncured composite precursor may be further pressed, then cured under ambient conditions, or at elevated temperature, or in an autoclave.

Use of vacuum or a slow running screen or a low viscosity aqueous emulsion polymer during water removal helps penetration of the polymer into the cement matrix.

In the process in accordance with the present invention, an aqueous slurry mixture composition of hydraulic cement, limestone or cement curing agent, any filler, such as silica, fibers, aqueous core-shell emulsion polymer, reinforcing fibers, and any thickeners, if used, is dispersed in water in a solids concentration of from 250 to 300 g solids/1000g of total mass before dewatering.

In accordance with the methods of the present invention, the aqueous slurry mixture may be formed by mixing a hydraulic cement mixture with an aqueous slurry of fiber and core-shell aqueous emulsion polymer. The aqueous slurry mixture in accordance with the present invention is prepared by techniques which are well known in the fiber-cement art. The ingredients are mixed together as is convenient for efficient dispersion without pretreating or equilibrating any of the ingredients with each other. For use with machinery typically used in forming fiber cement articles, such as by the Hatschek process and modifications thereof, the aqueous slurry mixture can have a solids level of from 10 to 30 wt.%, or, preferably, from 10 to 20 wt.% is preferred.

Methods to form the aqueous slurry mixture comprise mixing the hydraulic cement, limestone or cement curing agent, and filler with a mixture of the aqueous emulsion polymer and polymer fibers for from 10 seconds to 20 minutes. Preferably, the mixing time is at least 30 seconds, or, more preferably at least 1 minute and up to 10 minutes, or, most preferably from 1 to 5 minutes.

Fiber cement articles, such as cement fiberboards and roof tiles, generally comprise cement, fillers and reinforcing fibers such as cellulosic or synthetic fibers. Such fiber cement articles are formed form aqueous slurry mixtures of these materials with other ingredients.

In accordance with the present invention, fiber cement articles comprise core-shell aqueous emulsion polymers that have a crosslinked rubbery core and an at least partially grafted acrylic or vinyl shell polymer, preferably, comprising the copolymerized residues of methyl methacrylate (MMA).

In accordance the aqueous slurry mixture of the present invention, the core-shell aqueous emulsion polymer comprises a rubbery core, and a shell polymer enables isolation of the core-shell aqueous emulsion polymer by coagulation to a powder and also provides improved compatibility with the cement matrix as compared to the rubbery core alone.

In the core-shell aqueous emulsion polymer of the present invention the weight ratio of the core to the shell polymer of the core-shell aqueous emulsion polymer ranges from 85:20 to 97:3, or, preferably, from 87:13 to 94:6.

The core-shell aqueous emulsion polymers in accordance with the present invention may be formed by conventional polymerization techniques wherein one of the polymer stages is prepared in the presence of a previously prepared polymer stage. The stages are at least partially grafted together by one or more covalent bonds. Because of the grafting, the core-shell aqueous emulsion polymer acts as one polymer but has the rubbery properties of the core and the hard polymer properties of the shell. In the polymerization, each polymer stage, core and shell, is prepared independently in the sense that surfactants, initiators, and other additives are selected independently and may be the same or different in kind and amount for each polymer. In the emulsion polymerization process, conventional surfactants may be used, such as, for example, anionic and/or nonionic emulsifiers, such as, for example, alkali metal or ammonium salts of alkyl, aryl, or alkylaryl sulfates in conventional amounts. In the emulsion polymerization process, free radical polymerization initiators, including, for example, thermal or redox initiators may be used. Thermal initiators may include, for example, peroxides, like t-butyl hydroperoxide; ammonium and/or alkali metal persulfates; sodium perborate; and other peracids in conventional amounts. Redox initiators comprise one or more oxidants with a suitable reductant, such as, for example, sodium sulfoxylate formaldehyde; ascorbic acid; isoascorbic acid; alkali metal and ammonium salts of sulfur-containing acids, such as sodium sulfite or bisulfite, and salts of the preceding acids may be used in conventional amounts. Chain transfer agents, such as, for example, mercaptans, such as alkyl thioglycolates, alkyl mercaptoalkanoates, and $C_4$-$C_{22}$ linear or branched alkyl mercaptans may be used to lower the molecular weight of the formed first polymer stage and second polymer stage, independently, and/or to provide a different molecular weight distribution than would otherwise have been obtained with any free-radical-generating initiator(s). Chain transfer agent(s) may be added in one or more additions or continuously, linearly or not, over most or all of the entire reaction period or during limited portion(s) of the reaction period. The monomer(s) may be added neat, i.e., not an emulsion in water, or as an emulsion in water, in one or more additions or continuously, linearly or not, over the reaction period, or combinations thereof.

Adhesion or attraction between the core-shell aqueous emulsion polymer, cement matrix and reinforcing fiber during processing remains key for fiber cement articles produced through processes, such as the Hatschek process, which requires dewatering of the composition without loss of materials aside from water.

A cement-unstable core-shell aqueous emulsion polymer may be used which will coagulate somewhat not migrate during water removal. Examples of such core-shell aqueous emulsion polymers may include any aqueous emulsion polymer having a shell that is not stable in alkaline pH or high Ca++ ion content environments, including uncharged polymers not containing more than 0.5 wt.%, based on total polymer solids, of nonionic surfactant. Also included are core-shell aqueous emulsion polymers that contain some agglomerating agent, such as pmma.

By contrast, an aqueous emulsion polymer is considered "cement stable' if upon mixing with cement it does not flocculate nor cause a shortening of the pot life or workability time of a mortar. Cement stable aqueous emulsion polymers having a Z-average primary particle size of less than 500 nanometers might pass through the wet fiber cement matrix and the perforated screens of a fiber cement article forming machine during the water removal method, such that much of the polymer is carried away.

In contrast to cement stable aqueous emulsion polymers, cement unstable core-shell aqueous emulsion polymers may be caused to predictably flocculate in a fiber cement wet mix at any point in the material stream leading up to the forming machine. These flocs can be in the form of clusters of primary particles, for example, from 1 microns nm up to less than 20 microns in Z-average primary particle size. The flocculated core-shell polymer can also, or additionally, precipitate onto any of the other components in the mix aside from water, such as extenders. In any such cases, the flocculated core-shell polymer will be more completely retained in uncured composite precursor after the excess process water is removed.

Preferably, to aid in core-shell aqueous emulsion polymer retention in the fiber cement article product, the aqueous slurry mixture can comprise from 2 to 20 wt.%, based on the total core-shell aqueous emulsion polymer solids of an emulsifier, such as, preferably, a nonionic surfactant, or an agglomerating agent, preferably, poly(methyl methacrylate).

The aqueous slurry mixture in accordance with the present invention comprises reinforcing fibers, such as synthetic fibers or natural fibers, like cellulose fibers, such as from eucalyptus or pine wood, or cellulosic fibers, as sieve to retain solids in dewatering. Suitable fibers for use in making the fiber cement articles in accordance with the present invention may include, for example, natural fibers, such as cellulosic fibers from bamboo, wood or hemp, or synthetic fibers other than cellulosic fibers such as, for example, mineral wool, polyester fibers, polyvinyl alcohol fibers; polyolefin fibers, such as PP (polypropylene), bi-component polymeric microfibers having polyamide core or polyolefin core, a polymer blend of polypropylene (PP) and a PP grafted with maleic anhydride (PP-g-MAH), a polyester polymer, such as polyethylene terephthalate (PET), or a polymer blend of a polyolefin, preferably, polypropylene, polypropylene grafted with maleic anhydride.

Suitable aqueous slurry mixture compositions in accordance with the present invention may comprise from 0.5 to 10.0 wt.%, or, preferably, from 1.0 to 5.0 wt.%, or, more preferably, from 1.5 to 5.0 wt.% of fiber solids.

In accordance with the aqueous slurry mixture of the present invention, the hydraulic cement may include ordinary Portland cement in the aqueous slurry mixture in an amount ranging from 60 to 80 wt.%, or, preferably, from 65 to 75 wt.%, based on the total solids weight of the fiber cement article.

The aqueous slurry mixture further comprises limestone or finely ground calcium carbonate or another cement curing agent, such as calcium formate, and, if needed extenders, such as CaCOs aggregates.

In accordance with the present invention, the aqueous slurry mixture further comprises fillers, such as fume silica, furnace slag, fly ash, limestone, or ceramic microspheres; corrosion inhibitors.

In accordance with aqueous slurry mixtures of the present invention, to insure a homogeneous fiber cement article product, fillers or additives should have a weight average particle size of 300 microns or smaller. The aqueous slurry mixture compositions in accordance with the present invention thus consist essentially of materials that have a weight average particle size of 300 microns or less.

The aqueous slurry mixtures in accordance with the present invention may include other ingredients, such as, for example, water reducers, such as superplasticizers; antifoaming agents; neutralizers; thickeners or rheology modifiers; humectants; wetting agents; biocides; plasticizers; pigments; colorants; waxes; and anti-oxidants.

The fiber cement articles in accordance with the present invention may be used as a building product, useful as, for example, tile underlayment, siding, panel, trim, fascia, roofing, crown molding, decking, and fence.

EXAMPLES: The following examples are used to illustrate the present invention without limiting it to those examples. Unless otherwise indicated, all temperatures are ambient temperatures (21-23 °C) and all pressures are 1 atmosphere.

Component proportions are indicated in the examples, below. The following abbreviations are used: Pbw: Parts by weight;
The materials used in the examples are, as follows:

Cellulose Fiber: Softwood pulp made of long fibers from coniferous tree species and used as an aqueous slurry, with a refining treatment with intensity level around 60-63 SR grade (w/ units expressed in Schopper Riegler grade) in accordance with ISO 5267-1, 27.8 wt.% solids (PineCel™ fibers, Klabin S/A, Paraná, Brazil)

Cement: Type III Portland Cement comprising calcium silicate alite ($3CaO\ SiO_2$) or (C3S) about 50-70 wt.%, and the remainder as belite ($2CaO \cdot SiO_2$) or (C2S), and phases composed of tricalcium aluminate ($3CaO \cdot Al_2O_3$) or ($C_3A$)

and tetracalcium ferroaluminate (4CaO·Al$_2$O$_3$.Fe$_2$O$_3$) or C$_4$AF.

Limestone filler: Calcário Agricola - 42 - 45 (wt.%) CaO (~40 micron or 325 mesh, Votorantim, Itau de Minas - Minas Gerais, Brazil).

Synthetic Fiber: Polyvinyl alcohol (PVOH) microfibers: High tenacity and high modulus PVA fiber W1 6mm (Anhui Wanwei Updated Hightech Material Industry Co. Ltd., Chao hu, Anhui, China). PVOH fiber properties are presented from the fiber producer data sheet in Table 1, below.

Table 1: Synthetic Fiber Properties

| Properties | value |
|---|---|
| Linear density (dtex*) | 2 |
| Tenacity (cN/dtex) | 12.2 |
| E-Modulus (cN/dtex) | 275 |
| Elongation (%) | 6.8 |
| Hot water solubility % (90°C, 1 h) | 0.7 |
| Dispersion grade (class)** | 1 |
| Length (mm) | 6 |
| *1 dtex = 1 g per 10000 m; ** 1 best, 4 worst. | |

Aqueous emulsion Polymers 1, 2, 3 and 1A were made as set forth in the Synthesis Examples 1 and 1A, below.

Synthesis Example 1: Polymer 1 Core-shell (90//10 w/w) emulsion polymer of butyl acrylate (BA) (99.3%) crosslinked with allyl methacrylate (ALMA) (0.7%) and shell 100%, methyl methacrylate (MMA). Emulsion polymerization was carried out in a 5 liter 4-necked round bottom flask reactor equipped with a mechanical stirrer, heating mantel, thermometer, temperature controller and nitrogen (N$_2$) inlet. To the reactor was charged 1019.61 g of deionized water, and 0.47 g of acetic acid. Under an N$_2$ sweep, the reactor contents were heated to 40 °C. A butyl acrylate (BA) monomer emulsion was prepared in a separate container with 189.67 g of deionized water, 46.67 g of sodium lauryl sulfate surfactant (SLS, 28 wt.% in water), 1497.42 g of BA and 10.55 g of allyl methacrylate (ALMA). Mechanical agitation was applied to effect emulsification. To the reactor was added 32.99 g of a 3 wt.% aqueous solution of sodium formaldehyde sulfoxylate (SFS) (reductant). To the reactor was added 535.34 g of the BA monomer emulsion with 0.38 g of a 70 wt.% aqueous solution of t-butyl hydroperoxide (t-BHP). After a couple of minutes, the observed exotherm resulted in a temperature increase of about 41 °C (to 81 °C). The reaction was then cooled to 40 °C. To the reactor was added 697.73 g of the BA monomer emulsion with 0.52 g of a 70 wt.% aqueous solution of t-BHP. After a couple of minutes, the observed exotherm resulted in a temperature increase of about 41 °C. The reaction was then cooled back to 56 °C. To the reactor was added the remaining 513.85 g of the BA monomer emulsion with 0.35 g of a 70% aqueous solution of t-BHP. After a couple of minutes, the observed exotherm resulted in a temperature increase of about 38 °C. The core stage was completed by adding 1.12 g of a 70 wt.% aqueous solution of t-BHP and 26.79 g of a 3 wt.% aqueous solution of SFS to the reactor, while cooling to 75 °C over a period of 20 minutes. To the reactor was added 11.03 g of sodium lauryl sulfate surfactant (28 wt.% in water) and 167.48 g of MMA monomer followed by 40 minute simultaneous feeds of sodium persulfate (NaPS) and SFS solutions. The NaPS feed was 32.5 g of a 3 wt.% aqueous solution and the SFS feed was 16.37 g of a 3 wt.% aqueous solution. The shell stage was completed by adding 0.59 g of a 70 wt.% aqueous solution of t-BHP and 6.98 g of a 3 wt.% aqueous solution of SFS to the reactor, while cooling to 60 °C over a period of 20 minutes. The reaction was then cooled to 40 °C and filtered through cheesecloth. The Z average particle size of the aqueous emulsion polymer was measured at 65 nm (by Malvern Instruments light scattering), and the solids content was 32.5 % (by gravimetry). The calculated Tg of the rubbery core is from -20 to -140°C.

Synthesis Example 2: Polymer 2 Core-shell (90//10 w/w) emulsion polymer of butyl acrylate (BA) (99.3%) crosslinked with allyl methacrylate (ALMA) (0.7%) and shell 100%, methyl methacrylate (MMA). Synthesis Example 1 was repeated except that the amount of SLS surfactant in the monomer emulsion was 1.35 wt.%, based on the total weight of monomers polymerized. Further, 360 g of a crosslinked poly(BA) latex (seed, 32 wt.% polymer in water; Z-average particle size of 55 nm) was charged to the reactor along with the SFS reductant. The Z average particle size of the aqueous emulsion polymer was measured at 162 nm (by Malvern Instruments light scattering), and the solids content was 46.0% (by gravimetry). The calculated Tg of the rubbery core is -20 to -140°C.

Synthesis Example 3: Polymer 3 Core-shell (90//10 w/w) emulsion polymer of butyl acrylate (BA) (99.3%) crosslinked with allyl methacrylate (ALMA) (0.7%) and shell 100%, methyl methacrylate (MMA). Synthesis Example 1 was repeated except that the amount of SLS surfactant in the monomer emulsion was 0.50 wt.%, based on the total weight of monomers polymerized. Further, 360 g of a crosslinked poly(BA) latex (seed, 32 wt.% polymer in water; Z-average particle size of 236 nm) was charged to the reactor along with the SFS reductant. The Z average particle size of the aqueous emulsion polymer was measured at 550 nm (by Malvern Instruments light scattering), and the solids content was 52.0% (by gravimetry). The calculated Tg of the rubbery core is -20 to -140°C.

Synthesis Example 1A: Single Stage Aqueous Emulsion Polymer 1A. An emulsion polymerization was carried out in a conventional manner by gradual addition polymerizing a monomer emulsion in the presence of an anionic surfactant and a 15% sodium persulfate solution as in Example 2 of U.S. Patent Publication no. 2018/0327310 A1, to Evans et al. The properties of the aqueous emulsion polymers are set forth in Table 2, below.

Table 2: Aqueous Emulsion Polymers and Properties

| Product | Polymer 1A* | Polymer 1, 2 and 3 |
|---|---|---|
| Appearance | Milky white | Milky white |
| Polymer | Styrene acrylic | Core-Shell |
| Solid, by weight, % | 56 | Indicated above |
| pH | 6 | 2.0 - 6.0 |
| MFFT,°C | <0 | n/a** |
| Calculated Tg | -8 | n/a |
| *- Denotes Comparative Example. | | |

Roof Tile preparation: Flat multilayer roof tiles were prepared from the indicated wet formulations as set forth in Table 3, below, by a pulp screen dewatering process. The cement and limestone filler were dispersed in approximately 200 mL of water for 2 min at 2,000 rpm. In another container, cellulose was pre-dispersed in water (150 mL) during 1 min at same stirring speed. Cellulose fiber was then added to the cementitious slurry, synthetic fiber, previous dispersed in 150 mL of water was added and mixed for 2 min at 1,000 rpm. After this period, if included, the indicated aqueous emulsion polymer and the remaining (200 mL) water was added to form an aqueous slurry mixture at 27.8 wt.% dry material content by mixing for 2 min at 1,000 rpm. After that, the aqueous slurry mixture was subject to dewatering using a molding chamber equipped with a perforated screen covered with a 80 g/cm$^2$ paper filter and applying vacuum (200-300 mmHg). Fiber cement boards were cast in 4 layers of which only the top layer of the boards comprised the indicated emulsion polymer, wherein each layer was pressed in the molding chamber described before for 2 min at 3.2 MPa. The resulting board was finally pressed for 5 min at 3.2 MPa. Fiber cement boards were then "plastic sealed" (wrapped) in polyvinylidene fluoride wrap and left in an oven for 24h at 50°C; after this period, the cement fiberboard (160 × 200 × 5) mm$^3$ was removed from the oven and let sit at room temperature (28 d / 23±2ºC) for curing. Upon completing the curing period, the resulting fiber cement board was subject to impact testing. The amount of polymer in the resulting multilayer article listed in Table 3, below, represents the amount of polymer solids weight based on the weight of the entire multilayer article.

Table 3: Formulations for Polymer Containing Fiber Cement Roof Tiles

| Example | Cement | Limestone | PVOH Fiber | Cellulose | Polymer | | | | Polymer Amount |
|---|---|---|---|---|---|---|---|---|---|
| | wt.% | wt.% | wt.% | wt.% | | Particle size (nm) | Rubbery core ratio | Shell ratio | (Solids wt. %) |
| 1* | 74.4 | 22.5 | 0 | 3.1 | none | None | None | None | 0 |
| 2* | 73 | 22.1 | 1.9 | 3 | none | None | None | None | 0 |
| 3* | 71.2 | 21.6 | 1.9 | 2.9 | 1A | 290 | None | None | 2.4 |
| 4 | 71.6 | 21.7 | 1.9 | 2.9 | 1 | 65 | 90 | 10 | 2 |
| 5 | 71 | 21.5 | 1.8 | 2.9 | 1 | 65 | 90 | 10 | 2.8 |
| 6 | 71.6 | 21.7 | 1.9 | 2.9 | 3 | 550 | 90 | 10 | 2 |

(continued)

| Exampl e | Cement | Limeston e | PVOH Fiber | Cellulose | Polymer | | | | Polymer Amount |
|---|---|---|---|---|---|---|---|---|---|
| | wt.% | wt.% | wt.% | wt.% | | Particl e size (nm) | Rubbery core ratio | Shell ratio | (Solids wt. %) |
| 7 | 71.6 | 21.7 | 1.9 | 2.9 | 2 | 160 | 90 | 10 | 2 |
| 8 | 71.6 | 21.7 | 1.9 | 2.9 | 2 | 160 | 80 | 20 | 2 |
| *- Denotes Comparative Example. | | | | | | | | | |

TEST METHODS: The following test methods were used in the Examples.

Gardner Universal Impact Test: To measure impact resistance in fiber cement roof tiles a Gardner Universal Impact Tester (GARDCO™ IM-IG-1120 Heavy-Duty Impact Tester, Paul N. Gardner Co., Pompano Beach, FL) having a graduated 102 cm (40 inch) guide tube, a 0.91 kg (2 lb) weight to measure a maximum force of (80 inch-lb*f), a 12.7mm (0.500 in) diameter punch, 16.3 mm (0.640 in) die ASTM D5420 to evaluate a falling weight over a sample piece of roof tile having an area of 1.7 cm. The indicated sample roof tile was centered on a base plate over an opening of the 12.7 mm diameter punch. The die impactor with a nose of the 16.3mm was placed in contact with the center of the roof tile sample. The weight, centered above the impactor was raised inside a guide tube to the indicated height and was then released to drop onto the top of the impactor, forcing the nose through the sample roof tile. The Gardner Impact energy (force) at which the tile broke was reported in Tables 4 and 5 below. For each roof tile tested, 2 trials were measured and the best result taken and reported. The pass/fail criteria are reported visual by detecting cracks formation after the impact to the tile. To approximate a correlation between results from tests in accordance with ANSI/UL 2218-2012 using hail balls and Gardner impact testing using steel balls, the percentage in the improvement of the impact resistance has been expressed as an incremental % using Comparative Example 2 in Tables 4 and 5, below, as a control of 100%.

Table 4: Gardner Impact Testing Report

| Example | Maximum energy in Joules (in/lb*f) | | | | | |
|---|---|---|---|---|---|---|
| | 1.12 (10) | 1.35 (12) | 1.57 (14) | 1.81 (16) | 1.5 (18) | 2.25 (20) |
| 1* | nm | nm | nm | nm | nm | nm |
| 2* | met | met | met | nm | nm | nm |
| 3* | met | met | nm | nm | nm | nm |
| 4 | met | nm | nm | nm | nm | nm |
| 5 | met | met | met | met | met | met |
| 6 | met | met | met | met | met | nm |
| 7 | met | met | met | met | met | met |
| 8 | met | met | nm | nm | nm | nm |
| *- Denotes Comparative Example; nm: not met. | | | | | | |

Table 5: Impact resistance point per sample

| Example | Polymer | | | | | |
|---|---|---|---|---|---|---|
| | | Particle size[1] (nm) | Rubbery core | Shell | wt.% | Kinetic Energy Data |
| 1* | none | None | None | None | 0 | less than example 2 representing space without fibers |
| 2* | none | None | None | None | 0 | 100% |
| 3* | 1A | 290 | None | None | 2.4 | 85% |

(continued)

| Example | Polymer | | | | | Kinetic Energy Data |
|---|---|---|---|---|---|---|
| | | Particle size[1] (nm) | Rubbery core | Shell | wt.% | |
| 4 | 1 | 65 | 90 | 10 | 2 | 72% |
| 5 | 1 | 65 | 90 | 10 | 2.8 | 142% |
| 6 | 1 | 550 | 90 | 10 | 2 | 128% |
| 7 | 1 | 160 | 90 | 10 | 2 | 142% |
| 8 | 1 | 160 | 80 | 20 | 2 | 85% |
| 1. Z-average of the particle size; *- Denotes Comparative Example. | | | | | | |

As shown in Tables 4 and 5, above, the Gardner impact resistance measurement performed in Comparative Example 1 with no synthetic fibers provides a result of less than 10 in/lb*f and represents conventional cement articles without fibers. Comparative Example 2, 2 with 1.9 wt.% solids PVOH fibers had an impact resistance of 14 in/lb*f and represents conventional fiber cement articles used to normalized the results for the examples on this invention. Comparative Example 3 with 1.9% weight solids PVOH fibers, 2.9 wt.% solids of cellulose fibers and 2.4 wt.% solids of a conventional one stage aqueous emulsion polymer 1A exhibits an inferior impact resistance compared to Comparative Example 2. Accordingly, inclusion of a polymer in a conventional form may decrease the impact resistance properties of fiber cement articles made therefrom even at low concentration. Meanwhile, as shown in inventive Example 5 the presence of a core-shell aqueous emulsion polymer having a crosslinked rubbery core and a Z-average particle size of 65 nm at a loading of 2.8 wt.% of dry solids results in a dramatic improvement in impact resistance to a rating of 142%; in inventive Examples 4 and 8, at a 2.0 wt.% dry solids loading, the indicated polymer did not give improved impact result at break but did perform better than Comparative Examples 1, 2, and 3 as the visually observed cracks were shallower and narrower than in the comparative examples, especially in Example 8 where the polymer had a larger Z-average particle size. As shown in inventive Examples 6, and 7, an increased average particle size of the core-shell aqueous emulsion polymer enables improvement in the Gardner impact resistance.

## Claims

1. A fiber cement article having improved impact resistance comprising from 1 to 25 wt.%, based on the total solids weight of the fiber cement article, of one or more core-shell aqueous emulsion polymers having a crosslinked rubbery core with a calculated glass transition temperature (calculated Tg) of from -20 to -140 °C, and an at least partially grafted acrylic or vinyl shell polymer having a calculated Tg of from 20 to 170 °C, and a Z-average primary particle size of from 55 to 800 nm, cement, and, further wherein, the fiber cement article comprises reinforcing fibers.

2. The fiber cement article as claimed in claim 1, wherein the fiber cement article comprises from 2.4 to 19 wt.%, based on the total solids weight of the fiber cement article, of one or more core-shell aqueous emulsion polymers having a crosslinked rubbery core with a calculated glass transition temperature (calculated Tg) of -20 °C, and an at least partially grafted acrylic or vinyl shell polymer having a calculated Tg of from 20 to 170 °C.

3. The fiber cement article as claimed in claim 2, wherein at least one of the one or more core-shell aqueous emulsion polymer comprises an at least partially grafted acrylic or vinyl shell polymer having a calculated Tg of 45 °C or higher.

4. The fiber cement article as claimed in claim 1, wherein the shell polymer comprises the copolymerized residues of at least one of the one or more vinyl or $C_1$ to $C_4$ alkyl (meth)acrylates.

5. The fiber cement article as claimed in claim 1, wherein the shell polymer comprises the copolymerized residues of methyl methacrylate (MMA).

6. The fiber cement article as claimed in claim 1, wherein at least one of the one or more core-shell aqueous emulsion polymer has a Z-average primary particle size of from 110 to 800 nm.

**7.** The fiber cement article as claimed in claim 6, wherein at least one of the one or more core-shell aqueous emulsion polymers has a Z-average primary particle size of from 140 to 650 nm.

**8.** The fiber cement article as claimed in claim 1, wherein the weight ratio of the crosslinked rubbery core of the core-shell aqueous emulsion polymer to the shell polymer of the core-shell aqueous emulsion polymer ranges from 85:20 to 97:3.

**9.** The fiber cement article as claimed in claim 1, wherein the crosslinked rubbery core of at least one of the one or more core-shell aqueous emulsion polymer in the fiber cement article comprises the copolymerized residues of from 0.2 to 2 wt.% of a crosslinking multi-ethylenically unsaturated monomer, monomer, based on the total weight of monomers used to make the crosslinked rubbery core.

**10.** The fiber cement article as claimed in claim 1, wherein the reinforcing fibers are chosen from cellulosic fibers, synthetic fibers or mixtures thereof.

**11.** The fiber cement article as claimed in claim 10, wherein the reinforcing fibers are chosen from synthetic fibers comprising poly(vinyl alcohol) fibers.

**Patentansprüche**

**1.** Faserzementgegenstand, der verbesserte Schlagfestigkeit aufweist, umfassend von zu 1 bis 25 Gew.-%, bezogen auf das Gesamtfeststoffgewicht des Faserzementgegenstands, ein oder mehrere wässrige Kern-Hülle-Emulsionspolymere, die einen vernetzten gummiartigen Kern mit einer berechneten Glasübergangstemperatur (berechnete Tg) von -20 bis -140 °C und ein mindestens teilweise gepfropftes Acryl- oder Vinyl-Hüllenpolymer, das eine berechnete Tg von 20 bis 170 °C aufweist, und eine Z-durchschnittliche Primärpartikelgröße von 55 bis 800 nm aufweisen, Zement, und ferner wobei der Faserzementgegenstand Verstärkungsfasern umfasst.

**2.** Faserzementgegenstand nach Anspruch 1, wobei der Faserzementgegenstand von zu 2,4 bis 19 Gew.-%, bezogen auf das Gesamtfeststoffgewicht des Faserzementgegenstands, ein oder mehrere wässrige Kern-Hülle-Emulsionspolymere, die einen vernetzten gummiartigen Kern mit einer berechneten Glasübergangstemperatur (berechnete Tg) von -20 °C und ein mindestens teilweise gepfropftes Acryl- oder Vinyl-Hüllenpolymer, das eine berechnete Tg von 20 bis 170 °C aufweist, umfasst.

**3.** Faserzementgegenstand nach Anspruch 2, wobei mindestens eines des einen oder der mehreren wässrigen Kern-Schale-Emulsionspolymere ein mindestens teilweise gepfropftes Acryl- oder Vinyl-Hüllenpolymer, das eine berechnete Tg von 45 °C oder mehr aufweist, umfasst.

**4.** Faserzementgegenstand nach Anspruch 1, wobei das Hüllenpolymer die copolymerisierten Reste von mindestens einem des einen oder der mehreren Vinyl- oder $C_1$- bis $C_4$-Alkyl(meth)acrylate umfasst.

**5.** Faserzementgegenstand nach Anspruch 1, wobei das Hüllenpolymer die copolymerisierten Reste von Methylmethacrylat (MMA) umfasst.

**6.** Faserzementgegenstand nach Anspruch 1, wobei mindestens eines des einen oder der mehreren wässrigen Kern-Hülle-Emulsionspolymere eine Z-durchschnittliche Primärpartikelgröße von 110 bis 800 nm aufweist.

**7.** Faserzementgegenstand nach Anspruch 6, wobei mindestens eines des einen oder der mehreren wässrigen Kern-Hülle-Emulsionspolymere eine Z-durchschnittliche Primärpartikelgröße von 140 bis 650 nm aufweist.

**8.** Faserzementgegenstand nach Anspruch 1, wobei das Gewichtsverhältnis des vernetzten gummiartigen Kerns des wässrigen Kern-Hülle-Emulsionspolymers zu dem Hüllenpolymer des wässrigen Kern-Hülle-Emulsionspolymers in einem Bereich von 85 - 20 bis 97 - 3 liegt.

**9.** Faserzementgegenstand nach Anspruch 1, wobei der vernetzte gummiartige Kern von mindestens einem des einen oder der mehreren wässrigen Kern-Hülle-Emulsionspolymere in dem Faserzementgegenstand die copolymerisierten Reste von 0,2 bis 2 Gew.-% eines vernetzenden mehrfach ethylenisch ungesättigten Monomers Monomer umfasst, bezogen auf das Gesamtgewicht von Monomeren, die verwendet werden, um den vernetzten gummiartigen Kern herzustellen.

10. Faserzementgegenstand nach Anspruch 1, wobei die Verstärkungsfasern aus Zellulosefasern, synthetischen Fasern oder Mischungen davon ausgewählt sind.

11. Faserzementgegenstand nach Anspruch 10, wobei die Verstärkungsfasern aus synthetischen Fasern ausgewählt sind, umfassend Poly(vinylalkohol)fasern.


**Revendications**

1. Article en fibrociment ayant une résistance à l'impact améliorée comprenant de 1 à 25 % en poids, en fonction du poids de solides totaux de l'article en fibrociment, d'un ou plusieurs polymères en émulsion aqueuse à noyau-enveloppe ayant un noyau caoutchouteux réticulé avec une température de transition vitreuse calculée (Tg calculée) allant de -20 à -140 °C, et un polymère d'enveloppe acrylique ou vinylique au moins partiellement greffé ayant une Tg calculée allant de 20 à 170 °C, et une taille de particule primaire moyenne en Z allant de 55 à 800 nm, du ciment, et, dans lequel en outre, l'article en fibrociment comprend des fibres de renforcement.

2. Article en fibrociment selon la revendication 1, dans lequel l'article en fibrociment comprend de 2,4 à 19 % en poids, en fonction du poids de solides totaux de l'article en fibrociment, d'un ou plusieurs polymères en émulsion aqueuse à noyau-enveloppe ayant une un noyau caoutchouteux réticulé avec une température de transition vitreuse calculée (Tg calculée) de -20 °C, et un polymère d'enveloppe acrylique ou vinylique au moins partiellement greffé ayant une Tg calculée allant de 20 à 170 °C.

3. Article en fibrociment selon la revendication 2, dans lequel au moins l'un parmi le ou les polymères en émulsion aqueuse à noyau-enveloppe comprend un polymère d'enveloppe acrylique ou vinylique au moins partiellement greffé ayant une Tg calculée de 45 °C ou plus élevée.

4. Article en fibrociment selon la revendication 1, dans lequel le polymère d'enveloppe comprend les résidus copolymérisés d'au moins l'une parmi le ou les (méth)acrylates de vinyle ou d'alkyle en $C_1$ à $C_4$.

5. Article en fibrociment selon la revendication 1, dans lequel le polymère d'enveloppe comprend les résidus copolymérisés de méthacrylate de méthyle (MMA).

6. Article en fibrociment selon la revendication 1, dans lequel au moins l'un parmi le ou les polymères en émulsion aqueuse à noyau-enveloppe a une taille de particule primaire moyenne en Z allant de 110 à 800 nm.

7. Article en fibrociment selon la revendication 6, dans lequel au moins l'un parmi le ou les polymères en émulsion aqueuse à noyau-enveloppe a une taille de particule primaire moyenne en Z allant de 140 à 650 nm.

8. Article en fibrociment selon la revendication 1, dans lequel le rapport pondéral du noyau caoutchouteux réticulé du polymère en émulsion aqueuse à noyau-enveloppe au polymère d'enveloppe du polymère en émulsion aqueuse à noyau-enveloppe va de 85:20 à 97:3.

9. Article en fibrociment selon la revendication 1, dans lequel le noyau caoutchouteux réticulé d'au moins l'un parmi le ou les polymères en émulsion aqueuse à noyau-enveloppe dans l'article en fibrociment comprend les résidus copolymérisés de 0,2 à 2 % en poids de monomère d'un monomère de réticulation à insaturations éthyléniques multiples, en fonction du poids total des monomères utilisés pour fabriquer le noyau caoutchouteux réticulé.

10. Article en fibrociment selon la revendication 1, dans lequel les fibres de renforcement sont choisies parmi des fibres cellulosiques, des fibres synthétiques ou des mélanges de celles-ci.

11. Article en fibrociment selon la revendication 10, dans lequel les fibres de renforcement sont choisies parmi des fibres synthétiques comprenant des fibres d'alcool poly(vinylique).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7148270 B2
- US 2019119453 A1
- US 20180327310 A1, Evans

**Non-patent literature cited in the description**

- **FOX.** *Bull. Am. Physics Soc,* 1956, vol. 1 (3), 123